# EUROPÄISCHE PATENTSCHRIFT

(11) **EP 1 764 143 B1**
(45) Veröffentlichungstag und Bekanntmachung des Hinweises auf die Patenterteilung: **17.02.2010**
(21) Anmeldenummer: 06120555.5
(22) Anmeldetag: 13.09.2006
(51) Int. Cl.: B01D 29/54, B01D 29/21, B01D 29/23

(54) **Flüssigkeitsfilterelement**
Filter element for liquids
Elément filtrant pour liquides

(30) Priorität: 16.09.2005 DE 202005014689 U
(43) Veröffentlichungstag der Anmeldung: 21.03.2007
(73) Patentinhaber: MANN+HUMMEL GmbH, 71638 Ludwigsburg (DE)
(72) Erfinder: Bauder, Ralf, 68775 Ketsch (DE); Wolf, Michael, 66539 Neunkirchen (DE); Stinzendörfer, Joachim, 67346 Speyer (DE); Münkel, Karlheinz, 75038 Oberderdingen-Flehingen (DE); Nguyen, Duc Cuong, 30880 Laatzen (DE); Scherer, Oliver, 94419 Reisbach (DE); Gruber, Martin, 84140 Gangkofen (DE)

(56) Entgegenhaltungen:
- DE-A1- 3 046 179
- GB-A- 2 046 613
- US-A- 3 361 260
- US-A1- 2002 195 387
- US-A1- 2003 038 093

## Beschreibung

### Technisches Gebiet

Die Erfindung betrifft ein Filterelement für Flüssigkeiten nach dem Oberbegriff des Anspruches 1.

### Stand der Technik

Aus der US-Offenlegungsschrift US 2003/038093 A1 ist eine Filtereinheit bekannt, welche zwei zylindrische und konzentrisch angeordnete Filtermedien aufweist, welche jeweils an einem Ende mit einer Einlassplatte und am anderen Ende mit einer geschlossenen Auslassplatte verbunden sind.

Aus der US-Patentschrift US 3,361,260 A ist eine Filtereinheit bekannt, in welcher zwei Filterelemente in kompakter Form angeordnet sind, um eine große Filterfläche zu erzielen.

Aus der Offenlegungsschrift DE 30 46 179 A1 ist ein Filter bekannt, in welchem innerhalb eines zylindrischen Filterelements ein weiterer Filterzylinder angeordnet ist, wobei die Filterzylinder zwischen ihren Lochblechen einen Ringspaltraum ausbilden und eine betriebliche Verbindung zwischen dem Ringspaltraum und der Brennstoff-Abflussleitung besteht und eine weitere betriebliche Verbindung zwischen dem äußeren Kraftstoffraum des äußeren Filterzylinders und dem inneren Kraftstoffraum des inneren Filterzylinders mit der Brennstoffzuflussleitung besteht.

Aus der US-Offenlegungsschrift US 2002/195387 A1 ist ein Kraftstofffilter bekannt, welcher an ein Ende der Kraftstoffsaugleitung anschließbar ist, zur Verwendung in tragbaren Arbeitsmaschinen.

Das Dokument DE 196 08 589 offenbart ein Filterelement für gasförmige oder flüssige Medien, welches in ein Filtergehäuse einsetzbar ist. Das Filterelement verfügt über ein zickzackförmig gefaltetes, ringförmig geschlossenes Filtermedium. An den Stirnseiten des Filtermediums sind Endscheiben angeordnet. Das Filterelement wird von innen nach außen mit Flüssigkeit durchströmt, wobei die auf das Filterelement auftretenden Schmutzpartikel einen Filterkuchen auf der Oberfläche des Filterelementes bilden. Dadurch wird die Filterfeinheit des Filtermediums verbessert. Da in bestimmten Nutzungssituationen, derartige Filter auch ohne Gehäuse verwendet werden, wird für eine derartige Anwendung ein äußerer Stützmantel benötigt. Beim Stand der Technik wird dies gelöst durch einen gelochten Außenmantel. Der Außenmantel ist dabei entweder aus gelochtem Blech oder aus einem entsprechenden Kunststoffteil.

Um besonders große Filterflächen zu realisieren ist es notwendig einen Filterdoppelbalg mit einem zwischen innerem und äußerem Filterbalg angeordneten Ringraum zu realisieren. Der Ringraum wird mit dem verschmutzten Fluid angeströmt, wodurch es notwendig ist, eine exzentrische Anströmung zu verwirklichen. Dieses wird durch eine exzentrische Einströmöffnung realisiert. Diese bietet aber Nachteile beim Anschluss des Filterelements. Zur Realisierung eines zentrischen Anschlusses sind im Stand der Technik Adapterplatten bekannt, die eine Strömungsumleitung herstellen. Hier ist die vergrößerte Bauhöhe nachteilig, da dadurch die Filterfläche reduziert oder der Bauraum vergrößert wird.

Die Aufgabe der Erfindung ist es daher, ein Filterelement zu schaffen, welches einfach und kostengünstig in der Herstellung ist und eine maximale Bauraumausnutzung bietet. Diese Aufgabe wird durch die Merkmale des Patentanspruchs 1 gelöst.

### Offenbarung der Erfindung

Das erfindungsgemäße Filterelement ist zur Reinigung von Fluiden, insbesondere für Kühl-, Schmier- oder Bearbeitungsflüssigkeiten bei Werkzeugmaschinen vorgesehen. Das Filterelement verfügt über ein Filtermedium und wenigstens eine Endscheibe, wobei das Filtermedium zylindrisch ausgebildet ist und zwei Filterbälge aufweist. Hierbei können die Filterbälge z.B. kreisringförmig oder oval geschlossen ausgeführt sein. Die wenigstens eine Endscheibe ist dichtend mit den Stirnseiten des Filtermediums verbunden, wobei die Endscheibe mit dem Filtermedium z.B. verklebt oder verschweißt sein kann. Mindestens eine der Endscheiben verfügt über eine Öffnung, durch welche die Flüssigkeit in den Innenbereich einströmen bzw. aus dem Innenbereich herausströmen kann. Die Endscheibe kann aus Kunststoff oder Metall bestehen, wobei ein Filterelement mit Kunststoffendscheiben, in einer Sondermüllverbrennungsanlage vollständig entsorgt werden kann. Weiterhin korrodieren Endscheiben aus Kunststoff nicht, wodurch das Filterelement auch bei problematischen Flüssigkeiten eingesetzt werden kann. Das Filterelement verfügt zusätzlich zu den Endscheiben und dem Filtermedium noch über wenigstens einen Stützkörper, welcher außerhalb und/oder innerhalb des Filtermediums angeordnet ist. Entsprechend der Durchströmungsrichtung kann somit das Filtermedium abgestützt werden, wodurch eine Beschädigung des Filtermediums verhindert wird. Der Stützkörper ist hohlzylindrisch und fluiddurchlässig ausgeführt und kann mit den Endscheiben verbunden sein. Zwischen den beiden Filterbälgen wird ein Ringraum gebildet weicher durch die zu filtrierende Flüssigkeit durch die Endscheibe angeströmt wird. Von dort strömt die Flüssigkeit nach außen durch den äußeren Filterbalg um am Filterelement gereinigt herunter zulaufen und nach innen durch den inneren Filterbalg um dort dann gereinigt aus dem im Inneren des im inneren Filterbalg gebildeten hohlzylindrischen Freiraums durch die untere Endscheibe abzufließen. Erfindungsgemäß strömt die zu reinigende Flüssigkeit durch eine zentral angeordnete Einlassöffnung in die obere Endscheibe, wird in der Endscheibe zu einer exzentrisch angeordneten Auslassöffnung weitergeleitet und strömt von dort in den Ringraum zwischen den beiden Filterbälgen. Dadurch kann das Filterelement mittels der zentrischen Einlassöffnung einfach an vorgegebene Maschinenstrukturen angeschlossen werden, ohne dass eine bauraumeinnehmende aufwändige externe Flüssigkeitsumleitung durch einen Adapter oder eine zweite Endscheibe vorgenommen werden muss. Hierdurch ergibt sich entweder eine Bauraumersparnis oder eine Möglichkeit Filterfläche zu gewinnen. Weiterhin müssen keine zusätzlichen Maßnahmen zur Flüssigkeitsumlenkung geschaffen werden, wodurch die Prozesssicherheit durch Vermeidung von Undichtigkeitsstellen signifikant erhöht wird.

Erfindungsgemäß wird die Endscheibe einstückig durch ein Gasinnendruckverfahren (GID) hergestellt. Hierbei wird zuerst die thermoplastische Endscheibe im Spritzgießverfahren hergestellt und im direkten Anschluss wird über eine Gasinjektionsdüse im Werkzeug ein Gas, bevorzugt Stickstoff, in die heiße Kunststoffschmelze injiziert. Dabei verdrängt der Stickstoff im Teilekern die noch heiße Schmelze und bildet dabei die gewünschten Kanäle. Durch im Stand der Technik bekannte Vorgaben bei der Auslegung des Spritzgießwerkzeuges ist es möglich, den Verlauf der Kanäle festzulegen. Dieses erfolgt in dem die Endscheibe so konstruiert wird, dass im Bereich der gewünschten Kanäle die Erstarrung des Kunststoffes zuletzt erfolgt, so dass direkt nach dem Spritzgleßvorgang hier noch zu verdrängende heiße Kunststoffschmelze vorhanden ist. Hierbei ergibt sich der große Vorteil, eine einstückige Endscheibe zu haben, welche dennoch keinen zusätzlichen Bauraum vereinnahmt.

Erfindungsgemäß mündet die Einlassöffnung der Endscheibe in einem Aufnahmeraum, welcher Öffnungen zu Verteilerkanälen aufweist. Hierbei verlaufen die Verteilerkanäle radial bis zu dem Ringraum zwischen inneren und äußeren Filterbalg. Dort münden sie dann in axial in den Ringraum hineinragende Auslassöffnungen. Die Verteilerkanäle sind dabei bevorzugt gleichmäßig über die Fläche der Endscheibe verteilt, wobei bevorzugt eine Anzahl von 3- 8 Verteilerkanälen zu wählen sind. In Abhängigkeit von der gewünschten Flüssigkeitsdurchsatzmenge ist es jedoch auch durch das Verfahren problemlos möglich, weniger oder mehr Verteilerkanäle in der Endscheibe anzuordnen.

Die Verteilerkanäle verlaufen derart im inneren der plattenförmigen Endscheibe, dass die dem Filtermedium zugewandte Stirnseite der Endscheibe eine im Wesentlichen plane Fläche bildet. Auch hierdurch lässt sich erreichen, dass die beiden Filterbalge die gleiche Höhe einnehmen können und dadurch eine Synchronisierung von 2 Balgfertigungen vermieden werden kann. Bevorzugt sind die Kanäle dabei in eine Rippenstruktur der Kunststoffendscheibe eingebettet.

Gemäß einer vorteilhaften .Ausgestaltung ist das Stützrohr auf einem thermoplastischen Kunststoff, insbesondere Polyamid, im Spritzgießverfahren hergestellt. Durch diese Art der Herstellung ist eine besonders preisgünstige Herstellung gewährleistet, welche weiterhin den Vorteil einer leichten und einfachen Bauweise beinhaltet.

Bei einer vorteilhaften Ausgestaltung der Erfindung ist das Filtermedium zickzackförmig gefaltet und ringförmig geschlossen. Durch die Zickzackfaltung des Filtermediums verfügt das Filterelement über eine größtmögliche Oberfläche, welche zur Filtration zur Verfügung steht.

Bei einer besonderen Ausgestaltung der Erfindung ist das Filterelement zur Reinigung eines Dielektrikums einer Senk- oder Drahterodiermaschine vorgesehen. Auf derartigen Maschinen werden auch sehr kleine Partikel erzeugt, welche dann mit dem Dielektrikum von dem bearbeiteten Werkstück weg transportiert werden. Zur optimalen Funktionalität des Dielektrikums müssen auch sehr kleine Partikel von Anfang an ausgefiltert werden, da sonst die Effektivität des Bearbeitungsvorgangs reduziert wird. Daher ist ein hoher Anfangsabscheidegrad wichtig.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Fig. 1 zeigt einen Schnitt durch eine erfindungsgemäße Ausgestaltung der Endscheibe und

Fig. 2 eine Ausgestaltung eines erfindungsgemäßen Filterelements.

### Ausführungsform(en) der Erfindung

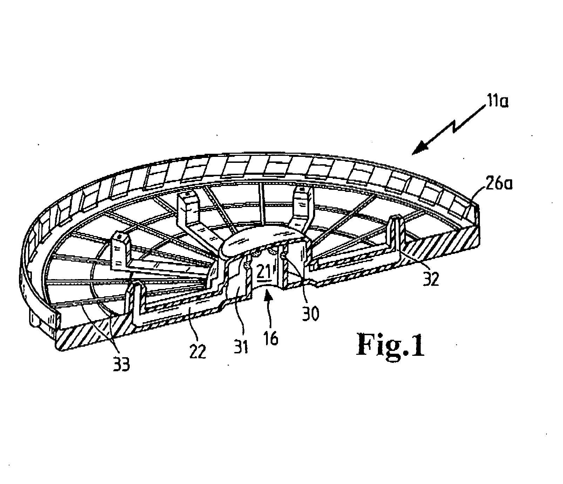

Die Fig. 1 zeigt eine erfindungsgemäße Ausgestaltung einer Endscheibe 11 a im Schnitt. Den vorherigen Figuren entsprechende Bauteile sind mit gleichen Bezugszeichen versehen. Die Endscheibe 11 a ist hierbei einstückig im Gasinnendruckverfahren (GID) hergestellt. Dabei sind die Verteilerkanäle 22 in der Endscheibe 11 a integriert. Die Endscheibe weist wiederum einen Flüssigkeitseinlass 16 auf, welcher in einen Aufnahmeraum 21 mündet. Dieser Aufnahmeraum 21 besitzt an dem Filtermedium zugewandten Ende mehrere über den Umfang verteilte Bohrungen 30, welche wiederum in eine Ringkammer 31 münden. Von dieser Ringkammer ausgehend sind die Verteilerkanäle 22 gleichmäßig in der Endscheibe 11 a verteilt angeordnet, wobei sie in axial in den Ringspalt 25 hineinragende Auslassöffnungen 32 münden. Die Verteilerkanäle 22 sind dabei mit weiteren Verstärkungsrippen 33 ausgebildet. Die Endscheibe 11 a wird dabei im Spritzgießverfahren hergestellt, wobei durch spezielle kunststofftechnische Ausgestaltungen innerhalb der Verteilerkanäle die Kunststoffschmelze länger flüssig bleibt, so dass über Anlegen eines Gasinnendrucks die noch flüssige Kunststoffschmelze herausgedrückt werden kann und so Kanäle und Verläufe in die Endscheibe appliziert werden können.

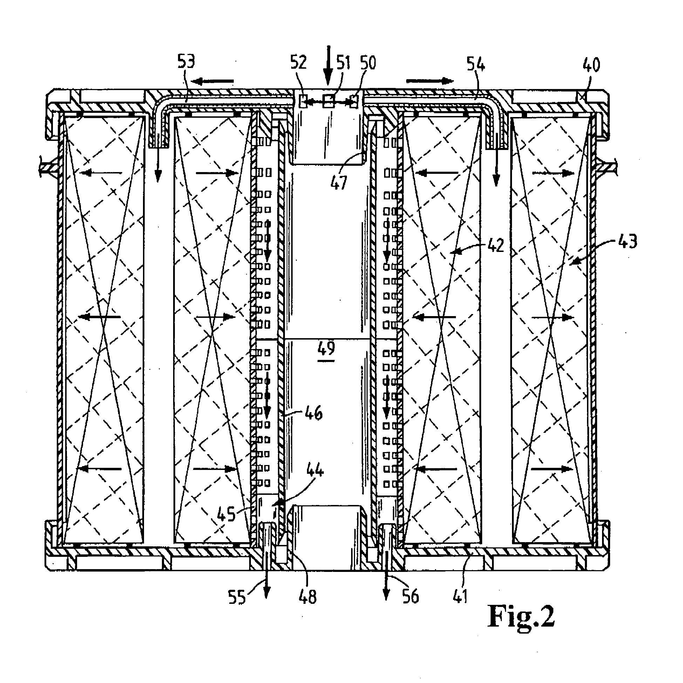

Die Fig. 2 zeigt eine Ausgestaltung eines erfindungsgemäßen Filterelements im Vollschnitt mit einer oberen Endscheibe 40, einer unteren Endscheibe 41, zwischen denen dichtend ein innerer Filterbalg 42 und ein äußerer Filterbalg 43 angeordnet sind. Die Filterbälge sind aufgebaut wie die in Fig. 1 beschriebenen. Im Inneren des Filterbalgs 42 ist ein Stützsystem 44 mit einem perforierten äußeren Stützrohr 45 und einem inneren, geschlossenen Stützrohr 46 vorgesehen. An den beiden Endscheiben 40/41 ist jeweils ein Anschlussflansch 47/48 vorgesehen. Diese beiden Anschlussflansche dienen zur Aufnahme eines hier nicht gezeichneten Dorns. Der Dorn wird über Flachdichtungen an einer oder beiden Endscheiben 40/41 des Filterelements abgedichtet. Das zu filtrierende Medium gelangt zentrisch durch diesen Dorn hindurch. Dieser weist Löcher in seiner Wand auf. Durch diese Löcher strömt das zu reinigende Medium in den Innenraum 49 und gelangt von dort über die Löcher 50/51/52 zu den Verteilerkanälen 53/54 und wird dort zwischen innerem Filterbalg und äußerem Filterbalg geleitet. In den Filterbälgen wird das Medium filtriert und fließt gemäß den dargestellten Pfeilen durch den Außenbalg und dort am äußeren Umfang ab und durch den Innenbalg und im doppelwandig ausgeführten Stützsystem 44 nach unten ab. Im Bereich der Endscheibe 41 befinden sich Öffnungen 55/56, durch welche die gereinigte Flüssigkeit abströmen kann. Der Vorteil des hier gezeigten Filterelements liegt darin, dass dieses als kompaktes Element in ein vorhandenes Filtersystem eingebaut werden kann, wobei lediglich der Anschlussdorn und die Anschlüsse für die gereinigte Flüssigkeit bei der Einbausituation zu berücksichtigen sind.

## Patentansprüche

1. Filterelement (10) für Fluide, insbesondere für Kühl-, Schmier- oder Bearbeitungsflüssigkeiten bei Werkzeugmaschinen, aufweisend ein Filtermedium, wobei das Filtermedium zylindrisch unter Ausbildung eines Ringraumes zu einem inneren (12a) und einem äußeren Filterbalg (12b) ausgebildet ist, die Endscheiben (11a,b) an Stirnseiten des Filtermediums angeordnet sind, wobei weiterhin die Durchströmung des Filterelements (10) vom Ringraum von Außen nach Innen durch den inneren und von Innen nach Außen durch den äußeren Filterbalg erfolgt, wenigstens eine stirnseitige Endscheibe (11a) aus Kunststoff, wobei die Endscheibe das Filtermedium stirnseitig abschließt und wenigstens einen fluiddurchlässigen Stützkörper (13, 14), wobei die Endscheibe (11a) eine zentrisch angeordnete Einlassöffnung (16) für die zu filternde Flüssigkeit sowie wenigstens eine exzentrisch dazu angeordnete Auslassöffnung (23) für die zu filternde Flüssigkeit aufweist, derart, dass die Flüssigkeit von der Einlassöffnung durch mindestens einen Kanal (22, 53, 54) in den Ringspalt zwischen inneren und äußeren Filterbalg strömt, **dadurch gekennzeichnet, dass** die Einlassöffnung der Endscheibe in einen Aufnahmeraum (21, 49) mündet, welcher Öffnungen zu Verteilerkanälen (22, 53, 54) aufweist, wobei die Verteilerkanäle radial bis zu dem Ringraum zwischen innerem und äußerem Filterbalg verlaufen und dort in axial in den Ringraum hineinragende Auslassöffnungen münden, wobei die Verteilerkanäle im Inneren der plattenförmigen Endscheibe verlaufen, derart, dass die dem Filtermedium zugewandte Stirnseite eine im Wesentlichen plane Fläche bildet und wobei die Endscheibe (11a) einstückig durch ein Gasinnendruckverfahren (GID) hergestellt ist.

2. Filterelement (10) nach einem der vorhergehenden Ansprüche, **dadurch gekennzeichnet, dass** der innere und der äußere Filterbalg über eine Klebschicht dicht mit der Endscheibe verklebt sind.

3. Filterelement (10) nach einem der vorhergehenden Ansprüche, **dadurch gekennzeichnet, dass** der Stützkörper (13, 14) aus einem thermoplastischen Kunststoff, insbesondere Polyamid im Spritzgießverfahren hergestellt ist.

4. Filterelement (10) nach einem der vorhergehenden Ansprüche, **dadurch gekennzeichnet, dass** das Filtermedium jeweils zick-zack-förmig gefaltet und ringförmig geschlossen ist.

5. Verwendung eines Filterelements (10) nach einem der vorangehenden Ansprüche zur Reinigung eines Dielektrikums einer Senk- oder Drahterodiermaschine.

## Claims

1. Filter element (10) for fluids, in particular for cooling, lubricating or machining fluids or machine tools, featuring a filter medium, the filter medium being designed cylindrically by forming an annular space to an inner (12a) and an outer filter bellows (12b), the end plates (11a,b) being disposed at the front sides of the filter medium, the through-flow of the filter medium (10) from the annular space being ensured from the outside to the inside through the inner and from the inside to the outside through the outer filter bellows, at least one frontal end plate (11 a) being made of plastic, the end plate closing the filter medium frontally and at least one fluid-permeable supporting element (13, 14), the end plate (11 a) featuring a centrically disposed intake opening (16) for the liquid to be filtered as well as at least one outlet opening (23) for the liquid to be filtered disposed eccentrically to it in such a way that the liquid flows from the intake opening through at least one duct (22, 53, 54) into the annular gap between inner and outer filter bellows, **characterized in that** the intake opening of the end plate leads into a receiving space (21, 49) which features openings leading to distribution ducts (22, 53, 54), the distribution ducts running radially to the annular space between the inner and outer filter bellows and lead there into outlet openings extending axially into the annular space, the distribution ducts running inside the plate-shaped end plate in such a way that the front side facing the filter medium forms a basically plane surface and the end plate (11a) being manufactured in a single piece by means of gas assist injection technology.

2. Filter element (10) according to one of the above-mentioned claims, **characterized in that** the inner and outer filter bellows are glued sealingly with the end plate by means of an adhesive layer.

3. Filter element (10) according to one of the above-mentioned claims, **characterized in that** the supporting element (13, 14) is made of a thermoplastic material, in particular of polyamide in the injection molding process.

4. Filter element (10) according to one of the above-mentioned claims, **characterized in that** the filter medium is pleated in a fanfold manner and closed in the shape of a ring.

5. Use of a filter element (10) according to one of the above-mentioned claims for cleaning a dielectric of a vertical eroding machine or a wire eroding machine.

## Revendications

1. Élément filtrant (10) pour des fluides, en particulier des liquides de refroidissement, de lubrification ou d'usinage sur des machines-outils, présentant un milieu filtrant, le milieu filtrant étant réalisé de manière cylindrique avec formation d'une chambre annulaire entre un soufflet de filtre intérieur (12a) et un soufflet de filtre extérieur (12b), les plaques d'extrémité (11a, b) étant placées sur les faces frontales du milieu filtrant, la traversée de l'élément filtrant (10) depuis la chambre annulaire s'effectuant de l'extérieur vers l'intérieur à travers le soufflet de filtre intérieur et de l'intérieur vers l'extérieur à travers le soufflet de filtre extérieur, au moins une plaque d'extrémité frontale (11a) étant en matière plastique, la plaque d'extrémité fermant frontalement le milieu filtrant, et au moins un corps de soutien (13, 14) perméable au fluide, la plaque d'extrémité (11a) présentant une ouverture d'admission (16) en position centrale pour le liquide à filtrer ainsi qu'au moins une ouverture de sortie (23) en position excentrique par rapport à elle pour le liquide à filtrer, de telle manière que le liquide s'écoule depuis l'ouverture d'admission à travers au moins un canal (22, 53, 54) jusque dans la fente annulaire située entre les soufflets de filtre intérieur et extérieur, **caractérisé en ce que** l'ouverture d'admission de la plaque d'extrémité débouche dans un logement (21, 49) qui présente des ouvertures vers des canaux distributeurs (22, 53, 54), les canaux distributeurs s'étendant radialement jusque dans l'espace annulaire entre les soufflets de filtre intérieur et extérieur et y débouchant dans des ouvertures de sortie formant saillie axiale dans la chambre annulaire, les canaux distributeurs s'étendant à l'intérieur de la plaque d'extrémité tabulaire, de telle manière que la face frontale tournée vers le milieu filtrant forme une surface essentiellement plane, et que la plaque d'extrémité (11a) est fabriquée d'un seul tenant par un procédé de pression intérieure de gaz.

2. Élément filtrant (10) selon l'une des revendications précédentes, **caractérisé en ce que** les soufflets de filtre intérieur et extérieur sont collés de manière hermétique à la plaque d'extrémité au moyen d'une couche de colle.

3. Élément filtrant (10) selon l'une des revendications précédentes, **caractérisé en ce que** le corps de soutien (13, 14) est fabriqué dans un matériau synthétique thermoplastique, en particulier du polyamide, par un procédé de moulage par injection.

4. Élément filtrant (10) selon l'une des revendications précédentes, **caractérisé en ce que** le milieu filtrant est plié en accordéon et fermé de manière annulaire.

5. Utilisation d'un élément filtrant (10) selon l'une des revendications précédentes pour purifier un diélectrique d'une machine de lamage ou d'érosion au fil.
